# EUROPEAN PATENT APPLICATION

(11) **EP 0 865 983 A2**
(43) Date of publication of application: **23.09.1998**
(21) Application number: 97302874.9
(22) Date of filing: 25.04.1997
(51) Int. Cl.: B62J 6/18

(54) **Cycle mudguard with concealed electric wires**

(30) Priority: 18.03.1997 GB 9524460
(71) Applicant: Webb, Ronald Richard, Stratford-Upon-Avon, Warwickshire CV37 9BW (GB)
(72) Inventor: Webb, Ronald Richard, Stratford-Upon-Avon, Warwickshire CV37 9BW (GB)

(57) **Abstract**

A cycle mudguard section with concealed electrical conducting wires whereby the wires are fed between an insert strip 2. and the main body of the mudguard section 1. The electrical conducting wires are used to connect the rear lamp to the battery box. Although the same section design is used for the front mudguard section where no wire is required this same design is used to ensure that the front mudguard matches the rear mudguard.
To provide an attractive shape at the front and the rear of both the front and rear mudguard a plastic moulding is fitted. This moulding ensures that the open end created by the insert strip is covered.

## Description

This invention relates to cycle mudguards which incorporate concealed electrical conducting wires.

Cycle mudguards which are manufactured from an aluminium foil which is encapsulated within a plastic material have been used for many years in the cycle industry. Where there is a need to connect the electric rear lamp to the battery box the rear mudguard has been constructed with three separate foils. One foil is used to make a connection to earth and a second is used as a direct electrical connection between the lamp and the battery. The direct connection between the foil and the pin that is connected to the ends of the wires of the lamp or battery is via a hollow metal connector. The outer form of the metal connector is serrated and this serrated form is intended to make contact with the foil when fitted into a pierced hole in the mudguard. The contact with the foil has not proved to be reliable or permanent in use. The accepted alternative has been to use conventional wires. These wires are normally fixed on to the underside of the mudguard by metal clips that are riveted to the mudguard. The weakness of this system is that the wires are only secured at intervals along the length of the mudguard.

According to the present invention there is provided a cycle mudguard profile which is designed to receive a narrow insert strip which by example is situated on the centre of the outer surface of the mudguard. This narrow insert strip is retained by inwardly extending ribs on the main body of the mudguard. The insert strip is so designed that two or more wires can be concealed within this insert strip. Holes can be placed in suitable positions either in the main body of the mudguard or the insert strip to allow the wires to be fed to the inner or outer part of the mudguard form. The wires can then be connected to their respective units by suitable connectors.

A specific embodiment of the invention will now be described by way of example with reference to the accompanying drawing in which:-
Figure 1. shows the cross section of the mudguard 1. showing the insert strip 2. in position. The figure 1. also shows the rivet 3. securing the metal plate 4. in position. The metal plate 4. could represent the fixed bridge or the fork crown. The figure 1. also shows the two wires 5. on one side of the rivet. These wires 5. can alternatively be positioned on either side of the rivet.
Figure 2. shows a plan view of a section of the mudguard with the two rivets 3. securing a fixed bridge 4. in position.
Figure 3. shows a cross section of the mudguard where the two conducting wires are secured within the groove produced by the lips 7.
Figure 4. shows the application of an end cover moulding 5.
Figure 5. shows a side elevation of a front and rear mudguard. This figure shows a typical position for the conducting wires.

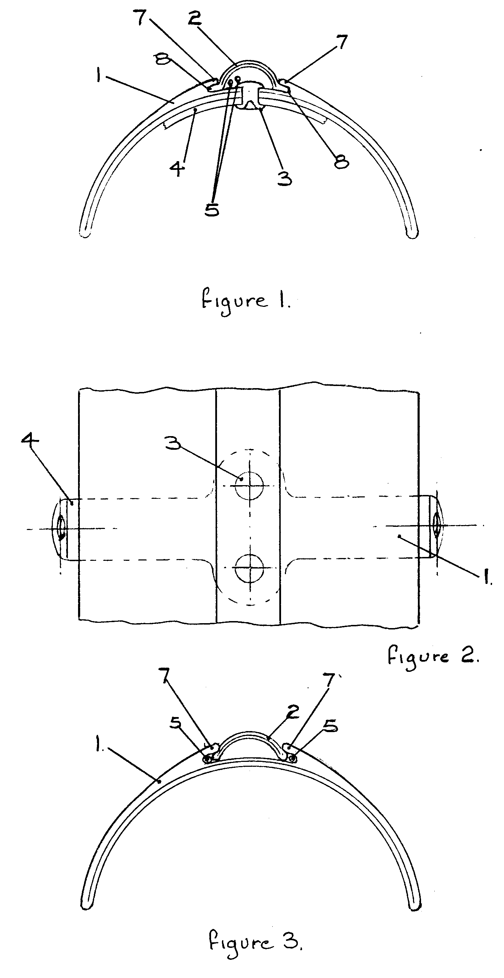

Referring to the drawing figure 1. the cross section of the mudguard section 1. shows the insert strip 2. in position and retained by the lips 7 formed on the mudguard section 1. The wires 5. are by way of example both shown situated on one side of the rivet 3. The metal part 4. is intended to illustrate either the fork crown or the fixed bridge.

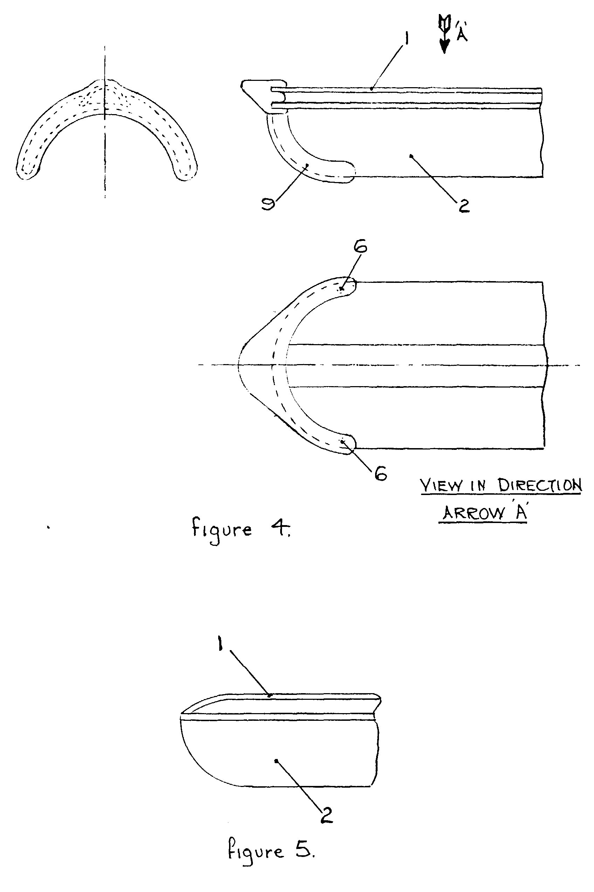

Figure 2. shows the main mudguard section 1. with the fixed bridge 4. retained by two rivets 3. positioned in line as shown.

Figure 3. shows the section of the mudguard where the two wires 5. are fitted under the lips 7.and retained by the lateral force of the insert 2.

Figure 4. shows a method of sealing the shaped end of the mudguard by the use of a plastic moulding 9. fitted over the end of the mudguard. Small spigots 6. formed as part of the moulding locate in suitable holes pierced in the mudguard 1.

Figure 5. shows the insert strip which has been formed at the end so as to close the semi circular gap produced between the insert strip 2.and the mudguard 1..

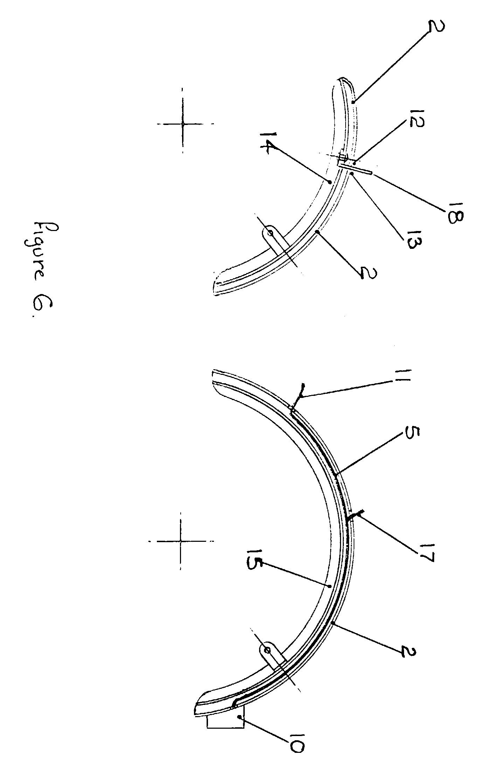

Figure 6. shows a side elevation of a typical mudguard set with the wires 10. in situ.on the rear mudguard. It can be seen that on the front mudguard the insert strip 2. is in two parts 12. and 13. to accommodate the fork crown 18. The insert strip is for decorative purposes only on the front mudguard. The rear mudguard is designed to accommodate the two electrical conducting wires. The wires connect the rear lamp 10. to the battery box. The wires leave the mudguard section at point 11. to connect with the battery box and at point 17. to connect with the second rear lamp if required.

Referring to the drawing figure 6. the mudguard set comprises a front mudguard 14. and rear mudguard 15. where the section of the mudguard is by way of example of the construction shown in figure 1. Figure 1. shows the main mudguard section 1. with insert strip 2. in position. It can be seen that the insert strip 2. is retained by the small lips 7. The shape of the insert strip 2. provides space for the two electrical conducting wires 5. even where the rivet 3. is positioned.

Figure 2. shows a plan view of the mudguard 1. with a fixed bridge 4. which is held in position by two rivets 3.

Figure 6. shows that on the front mudguard 14. the insert strip 2. is in two parts. The cut ends butt up to each side of the fork crown 18. On the rear mudguard 15. the two electrical conducting wires pass through a hole 11 in the insert strip 2. to connect with the battery box. It can be seen that the insert strip 2. is cut short so that the end rests on the top of the rear lamp 10. The electrical conducting wires pass through the gap between the insert strip 2. and the mudguard surface to join with the wires of the rear lamp 10. Where a secondary rear lamp is required, a hole 17. can be pierced through the insert strip 2. to allow the electrical conducting wires to connect to the second rear lamp.

Figure 3. shows an alternative where the two electrical conducting wires 5. are set within the retaining grooves in the main mudguard section 1. The grooves are formed by the ribs 7.

Figure 4. shows an end moulding 9. which fits over both the main section 1. and the insert strip 2. This moulding can be fitted as a separate moulding or can be injection moulded direct on to the mudguard assembly. The main function of this moulding is to ensure that the ends of the mudguard assembly have a good appearance and are free from sharp edges.

Figure 5. shows an arrangement where the insert strip 2.has been formed at the end of the section so as to form a neat end. This would be an alternative method to the arrangement outlined in Figure 4.

## Claims

1. A cycle mudguard section with concealed electrical conducting wires where the wires are retained by a cavity which is produced by an insert strip that is retained by a mechanical means to the outer skin of the mudguard section.

2. A cycle mudguard section with concealed electrical conducting wires where the wires are threaded through a cavity of a semi circular form which is produced by an insert strip that is retained by a mechanical means to the outer skin of the mudguard section.

3. A cycle mudguard section with concealed electrical conducting wires where the wires are threaded through a cavity of any suitable form which is produced by an insert strip that is retained by a mechanical means to the outer skin of the mudguard section.

4. A cycle mudguard section with concealed electrical conducting wires where the wires are threaded through a cavity of any suitable form or forms which can be produced by an integral part of the main mudguard section and formed on the outside skin of the mudguard section.

5. A cycle mudguard section with concealed electrical conducting wires where the wires are retained mechanically by suitably formed ribs. The ribs are also designed to retain an insert strip although the insert strip may be incorporated for decorative purposes only.

6. A cycle mudguard section with concealed electrical conducting wires where the insert strip 2. is any other means other than mechanical such as by suitable adhesives.

7. A cycle mudguard section with concealed electrical conducting wires where the insert strip is formed at the front end of the front mudguard so that the cavity formed by the insert strip is eliminated.

8. A cycle mudguard section with concealed electrical conducting wires where the front edge of the front mudguard,the rear edge of the front mudguard and the rear edge of the rear mudguard have moulded ends which cover the gap that is produced by the form of the insert strip.

9. A cycle mudguard section with concealed electrical conducting wires where the cavity produced between the insert strip and the main mudguard section is of a sufficient size and shape to allow for the wires to pass where the head of the rivet or rivets exist.
